# EUROPÄISCHE PATENTANMELDUNG

(11) **EP 0 564 838 A1**
(43) Veröffentlichungstag der Anmeldung: **13.10.1993**
(21) Anmeldenummer: 93104008.3
(22) Anmeldetag: 12.03.1993
(51) Int. Cl.: B23K 7/10, B23K 9/12, B23K 26/04

(54) **Vorrichtung zum berührungslosen Erfassen von Daten einer thermischen Bearbeitungsmaschine**

(30) Priorität: 06.04.1992 DE 4211305
(71) Anmelder: MESSER GRIESHEIM GMBH, D-60270 Frankfurt (DE)
(72) Erfinder: Albert, Hans-Joachim, W-6238 Hofheim-Lorsbach (DE); Henrici, Reinhard, Dr., W-6251 Eschhofen (DE)

(57) **Zusammenfassung**

Die Erfindung geht von der Vorrichtung nach der älteren Patentanmeldung 92115743.4 aus, die das Werkstück (12) als Sender benutzt und das Sensierelement als Empfänger, wobei auftretende Phasenverschiebungen zwischen dem Sende- und Empfangssignal ein Maß für den Abstand sind. Zur Verbesserung im rauhen Schneidbetrieb und zur Vermeidung von Betriebsstörungen ist der Empfänger mindestens ein elektrisch von der Bearbeitungsmaschine isoliertes Teil (11, 13, 14) des Bearbeitungswerkzeuges (10).

## Beschreibung

Die Erfindung betrifft eine Vorrichtung zum berührungslosen Erfassen von Daten einer thermischen Bearbeitungsmaschine mit mindestens einem Bearbeitungswerkzeug und einem Werkstück, das an einen Wechselspannungsgenerator angeschlossen und mit einem Wechselspannungssignal beaufschlagt ist, der mit einer Auswerteeinheit verbunden ist, die Feldveränderungen erfaßt.

Bei thermischen Bearbeitungsverfahren einschließlich der Lasertechnik müssen zur Erreichung optimaler Schnittqualität vor Schneidbeginn und während des Schnittes die Abstände Unterkante Düsenspitze zur Werkstückoberfläche konstant bleiben. Gleichzeitig besteht die Forderung, daß der Bedienmann freie Sicht zum Bearbeitungsort haben muß, um in Fehlerfällen, die nicht automatisch erkannt werden, manuell reagieren zu können. Desgleichen sind Anbauten im Bereich der Düsenspitzen hinderlich für das Schneiden nicht ebener Werkstücke, da die Schneidgeschwindigkeiten und zulässigen Blechschrägen beschränkt werden müssen.

Die Forderungen der Schneidanwendungstechnik können daher nur realisiert werden, wenn die Störkontur der Brenner bzw. Schneidköpfe nicht durch Abtastorgane vergrößert werden.

Die kostengünstigsten Abstandsmeßmethoden sind kapazitive Verfahren. Dabei ist bekannt, koaxial um die Düse angebaute Ringe als Sensierelement zu benutzen, um keine Richtungsabhängigkeit in der X-Y-Schneidebene zu erhalten.

Weiterhin gibt es Signalauswertemethoden, die mit Schwingkreisen arbeiten, deren Frequenzverschiebung infolge Kapazitäts- bzw. Abstandsänderung der Sensierelemente zum Werkstück gemessen wird. Bei einem solchen Verfahren müssen dicht an der Düsenspitze LC-Glieder eingebaut werden, um die Mittenfrequenz des Schwingkreises konstant zu halten.

Bei diesen schwingkreisgestützten Meßsystemen ist ein hoher technischer Aufwand notwendig, um LC-Glieder in Form von feinen, im Betrieb nicht beweglichen Drahtwindungen nahe der Düsenspitze zu positionieren (DE 27 47 539 C2, DE 28 29 851 A1). Besonders empfindlich reagieren solche Systeme mit Driften auf Temperatureinflüsse, so daß hier weiterer Aufwand für die Temperaturkompensation (EP 0 294 324 B1) aufgewendet werden muß. Übergangswiderstände sind bei solchen Methoden stark signalbeeinflussend, so daß Trennstellen im eigentlichen Sensierelement nicht erlaubt sind. Durch manuellen oder durch automatischen Düsenwechsel werden bei schwingkreisgestützten Systemen die zuverlässige Kontaktierung des Sensierelementes gestört, da aufgebrachte dünne Leitschichten auf dem keramischen Isolator zur Maschine beschädigt werden. Der Systemarbeitspunkt verschiebt sich bei Änderung der Zuleitungslänge und deren Kapazität infolge von Temperatur- oder Vorformungseinfluß. Gleicher negativer Effekt wird durch in der Nähe befindliche Metallteile gebildet, da zusätzliche Parasitärkapazitäten entstehen. Durch all diese Effekte entsteht eine große Zahl von speziellen Abtastsystemen verbunden mit einer großen Teilevielfalt und Empfindlichkeit auf Toleranzen und Verschleißzustände, die im praktischen Betrieb auftreten. Es müssen stets teure Düsen mit besonderer Oberflächengüte eingesetzt werden.

Desweiteren gibt es die Vorrichtung nach der älteren europäischen Patentanmeldung 92115743.4, die das Werkstück als Sender benutzt und das Sensierelement als Empfänger, wobei auftretende Phasenverschiebungen zwischen dem Sende- und Empfangssignal ein Maß für den Abstand sind.

Diese Vorrichtung mit einem Empfänger wird für ring- und plättchenförmige Sensierelemente eingesetzt. Hierbei treten keine Temperatureinflüsse und Driften bzw. Betriebpunktverschiebungen auf. Parasitärkapazitäten lassen sind per Offset mit ein und derselben elektronischen Ausrüstung kompensieren. Gleiches gilt für die Änderung der Zuleitungslänge, die typischerweise bis 20 m unkritisch sind. Die Teilevielfalt ist nicht gegeben. Mit dem Verfahren nach der älteren Patentanmeldung können somit wesentliche Verbesserungen gegenüber dem Stand der Technik erzielt werden, wobei die Vergrößerung der Störkontur des Bearbeitungswerkzeuges noch nachteilig ist.

Weitere Schwierigkeiten bringen Zusatzsysteme für die Erkennung von Hindernissen bzw. abgekippten Bauteilen, da bei hohen Maschinengeschwindigkeiten und entsprechenden Bremszeiten Havariegefahr mit Beschädigungen oder zumindest mit Maschinenstillstandzeiten die Folge sind. Ferner stören große Schnittfugen, die signalverfälschend auf kleine Sensierelemente wirken.

Ausgehend von dem zuletzt genannten Stand der Technik nach der europäischen Patentanmeldung 92115743.4, der im Oberbegriff des Hauptanspruches berücksichtigt ist, liegt der Erfindung die Aufgabe zugrunde, eine Vorrichtung zu schaffen, die bei mannarmen Schneidanlagen ohne häufige Betriebsstörungen eingesetzt werden kann.

Durch die Erfindung werden Anbauten im Düsenbereich des Bearbeitungswerkzeuges vermieden, weil die an sich bekannte Düse eines Autogen- oder Plasmabrenners oder eines Laserschneidkopfes ohne zusätzlich angebrachte Empfangsteile der Empfänger ist. Dabei ist das als Werkstücksender- / Empfänger-Vorrichtung aufgebaute thermische Bearbeitungswerkzeug aufgrund der Strommessung so robust, daß es im rauhen Schneidbetrieb keine Sonderbehandlung braucht, da Übergangswiderstände nicht berücksichtigt werden müssen. Dies führt einerseits dazu, daß die für eine "zuverlässige" Kontaktierung beim Stand der Technik aufgebrachte dünne Leitschicht entfallen kann, was die Handhabung erleichtert und die Sensierung verbessert und es andererseits erlaubt, mehrere, beispielsweise zwei Teile des thermischen Bearbeitungswerkzeuges, elektrisch leitend und mechanisch lösbar miteinander zu verbinden. Durch diese Aufteilung des Sensierelementes in zwei oder mehrere Teile des Bearbeitungswerkzeuges ist es möglich, das der Düse nachfolgende Teil mit der Auswerteeinheit zu verbinden, so daß das "Verschleißteil" Düse frei ist von Anschlüssen und einfach manuell oder automatisch ausgetauscht werden kann. Dies geht nur, wie bereits eingangs erläutert wurde weil die Übergangswiderstände, wie sie z.B. die Verschraubung der Düse mit dem nachfolgenden, elektrisch leitenden Teil darstellen, das Messsignal nicht verfälschen. Diese Übergangswiderstände können unberücksichtigt bleiben, weil sie die Signalamplitude reduzieren, diese jedoch nicht ausgewertet wird. Die parasitären Kapazitäten infolge des Gewindes werden über den Nullabgleich des Sensors kompensiert.

Eine weitere Ausbildung der Erfindung sieht vor, elektrisch leitende Teile des thermischen Bearbeitungswerkzeuges voneinander isoliert anzuordnen, beispielsweise durch das Anordnen von Isolatoren zwischen den Teilen, so daß jedes Teil ein Sensierelement bildet. Die einzelnen Sensierelemente können bei Bedarf auch wieder aus mehreren lösbaren Teilen bestehen. Dies ist besonders dann wichtig, wenn wie oben bereits beschrieben ein Sensierelement aus einem Verschleißteil, z.B. der Düse besteht, welches gewechselt werden muß. Auf diese Weise kann der komplette Schneidbrenner oder der Laserschneidkopf als Multisensor ausgebildet werden, wobei die Teile über eine Umschalteinrichtung einzeln oder gemeinsam aktiv geschaltet werden können. In der Auswerteeineit erfolgt dabei eine automatische Anpassung an die aktiv geschalteten Teile des Bearbeitungswerkzeuges.

Die aktiv geschalteten Teile des Laserschneidkopfes oder des Schneidbrenners können zu unterschiedlichen elektrischen Funktionen für die Bearbeitungsmaschine herangezogen werden, wie Abstandsmessung, Havarieerkennung, Fernhavarieerkennung etc. oder für zusätzliche mechanische Funktionen, wie Schutz des Laserschneidkopfes oder des Schneidbrenners gegen vom Werkstück rückgestrahlte Energie aus dem eigentlichen Schneidprozeß.

So kann der Schutz gegen rückgestrahlte Energie beispielsweise durch größeren oder zumindest gleichen Durchmesser des oberen Teils des unteren Sensierelementes wie die weiter oben liegenden Brennerteile bzw. Schneidkopfteile und/oder geeignete Materialwahl mit großem Reflektionskoeffizienten für die betreffende Wellenlänge erreicht werden, während die Abstandsmessung mit der Düse/dem Schutz als Empfänger realisiert wird und das der Düse/dem Schutz nachfolgende Teil mit größerem Erfassungsbereich für die Havarieerkennung eingesetzt wird. Aufgrund des größeren Erfassungsbereiches des nachfolgenden Teiles kann die Düse vor Havarie z.B. mit abgekippten Bauteilen sicher geschützt werden.

Isolierte Teile und elektrisch miteinander verbundene Teile können gleichzeitig Bestandteil eines Bearbeitungswerkzeuges sein, wobei Teile des Laserschneidkopfes je nach technologischer Erfordernis für eine Funktion elektrisch verbunden werden und so ein Sensierelement mit größerer Integrationswirkung bilden.

Ein Ausführungsbeispiel der Erfindung ist in der Zeichnung dargestellt und wird im folgenden näher beschrieben.

Es zeigen:
- Fig. 1: ein Bearbeitungswerkzeug mit zwei elektrisch leitenden Teilen die lösbar miteinander verbunden sind.
- Fig. 2: ein Bearbeitungswerkezug mit zwei elektrisch leitenden Teilen die über einen Isolator lösbar verbunden sind.

In den Figuren ist ein Bearbeitungswerkzeug für eine technische Bearbeitungsmaschine dargestellt und mit 10 bezeichnet. Das Bearbeitungswerkzeug kann beispielsweise ein Plasma- oder Autogenschneidbrenner oder ein Laserschneidkopf sein, deren Aufbau und Funktion an sich bekannt sind und daher nicht näher beschrieben werden müssen. Bestandteil des Bearbeitungswerkzeuges 10 ist die Brennerdüse 11, die mechanisch lösbar über ein Gewinde oder eine vergleichbare Verbindung an dem zum Werkstück 12 weisenden Brennerkopf befestigt ist.

Zur Erreichung optimaler Schnittqualität ist es bei thermischen Bearbeitungsverfahren einschließlich der Lasertechnik erforderlich, vor Schneidbeginn und während des Schnittes die Abstände von der Unterkante der Düse 11 zur Oberfläche des Werkstückes 12 konstant zu halten. In der älteren europäischen Patentanmeldung 92115743.4 wird hierzu das Werkstück 12 als Sender benutzt und das Sensierelement als Empfänger, wobei auftretende Phasenverschiebungen zwischen dem Sende- und Empfangssignal ein Maß für den Abstand sind.

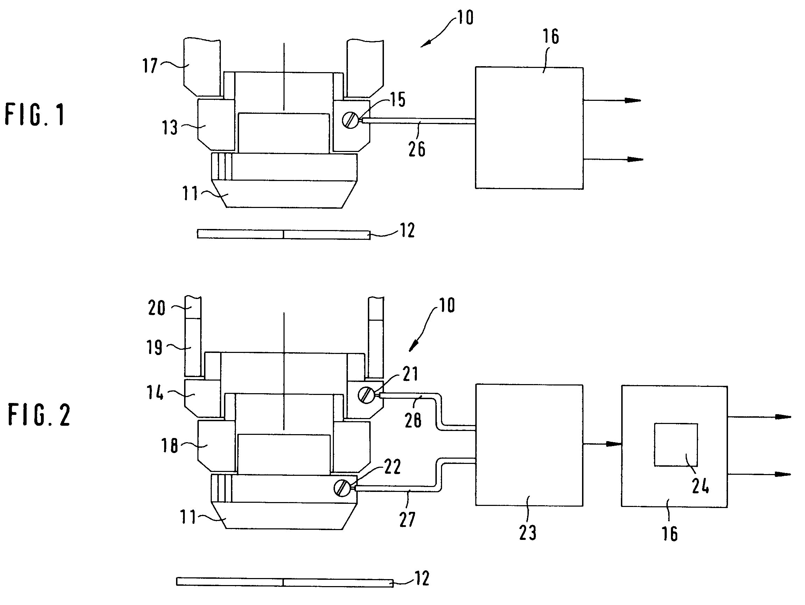

Die Erfindung macht von dem in der älteren europäischen Patentanmeldung 92115743.4 beschriebenen Sensierverfahren gebrauch, wobei gemäß der Erfindung der Empfänger die Düse 11, das Bearbeitungswerkzeug 10 und/oder Teile 13, 14 des thermischen Bearbeitungswerkzeuges sind. In Figur 1 ist eine elektrisch leitende Düse 11 mit einem elektrisch leitenden Teil 13 mechanisch lösbar verbunden.

An dem Teil 13 ist über Anschluß 15 und die geschirmte Meßleitung 26 die Auswerteeinheit 16 angeschlossen. Die geschirmte Meßleitung 26 kann auch koaxial zum Schneidsauerstoffkanal bzw. zur Werkzeugmittelachse geführt werden.

Da der Aufbau und die Funktion der Auswerteeinheit in der älteren europäischen Patentanmeldung 92115743.4 näher beschrieben ist, bedarf es hierzu keinerlei Ausführungen.

Über einen Isolator 17 ist die Düse 11 und das Teil 13 gegenüber den verbleibenden Teilen des Bearbeitungswerkzeuges isoliert. Durch die Verbindung der Auswerteeinheit 16 mit dem Teil 13 und die elektrisch leitende Verbindung des Teiles 13 mit der Düse 11 ist ein einfacher manueller oder automatischer Düsenwechsel möglich, da keine Anschlüsse an der Düse vorhanden sind. Hinzu kommt, daß durch das im Hauptpatent beschriebene Sensierverfahren nach einem Düsenwechsel ohne Justierarbeiten weitergearbeitet werden kann, da die auftretenden Übergangswiderstände die auszuwertenden Phasenverschiebungen zwischen Sende- und Empfängersignal nicht verändern.

In Figur 2 ist die elektrisch leitende Düse 11 über einen Isolator 18 mit einem weiteren elektrisch leitenden Teil 14 mechanisch lösbar verbunden, das seinerseits über einen Isolator 19 gegenüber den verbleibenden Teilen 20 des thermischen Bearbeitungswerkzeuges 10 isoliert ist. Teil 14 und Düse 11 sind über die Anschlüße 21, 22 und die geschirmten Meßleitungen 27, 28 an eine elektrische Umschaltung 23 angeschlossen und wirken so als Sensierelemente bzw. Empfänger einzeln oder gemeinsam. Dabei ist es selbstverständlich auch möglich, der Düse 11 ein mit ihr elektrisch leitend verbundenes Teil 13 zuzuordnen, um die im Zusammenhang mit Figur 1 beschriebenen Vorteile bei einem Düsenwechsel beizubehalten.

In der Auswerteeinheit 16 ist eine automatische Anpassung 24 an die aktiv geschalteten Teile 11, 14 des Bearbeitungswerkzeuges 10 vorgesehen. Die automatische Anpassung 24 besteht aus einer Verstärkungsanpassung an die geometrischen und physikalischen Umgebungsverhältnisse und bewirkt einen weiterverarbeitbaren Nutzsignalbereich. Die aktiv geschalteten Teile 11, 13, 14 des Bearbeitungswerkzeuges 10 werden zu unterschiedlichen elektrischen Funktionen für die Gesamtschneidmaschine herangezogen wie Abstand, Havarie, Fernhavarie, etc. oder für zusätzliche mechanische Funktionen, wie Schutz des Bearbeitungswerkzeuges gegen vom Werkstück 12 rückgestrahlte Energie aus dem eigentlichen Schneidprozeß.

So hat beispielsweise Teil 14 einen größeren Erfassungsbereich wie die im Durchmesser schmälere Düse 11 (Fig. 2) und erkennt daher z.B. gekippte Bauteile bevor diese mit der Düse 11 kollidieren können. Selbstverständlich können die isolierten Teile 11, 13, 14 des Bearbeitungswerkzeuges 10 je nach technologischem Erfordernis für eine Funktion elektrisch verbunden werden und so ein Sensierelement mit größerer Integrationswirkung bilden. Hierdurch werden kleine Störungen im Erfassungsbereich gemittelt und aufgrund der Größenverhältnisse scheinbar ausgeblendet.

## Patentansprüche

1. Vorrichtung zum berührungslosen Erfassen von Daten einer thermischen Bearbeitungsmaschine mit mindestens einem Bearbeitungswerkzeug und einem Werkstück, das an einen Wechselspannungsgenerator angeschlossen und mit einem Wechselspannungssignal beaufschlagt ist, wodurch es als Sender wirkt und dem Werkstück gegenüberliegend ein Empfänger angeordnet ist, der mit einer Auswerteeinheit verbunden ist, die Feldveränderungen erfaßt
dadurch gekennzeichnet,
daß der Empfänger mindestens ein elektrisch von der Bearbeitungsmaschine isoliertes Teil (11, 13, 14) des Bearbeitungswerkzeuges (10) ist.

2. Vorrichtung nach Anspruch 1,
dadurch gekennzeichnet,
daß das Teil die Düse (11) ist.

3. Vorrichtung nach Anspruch 1,
dadurch gekennzeichnet,
daß das Teil der Brenner (10) ist.

4. Vorrichtung nach einem der Ansprüche 1 bis 3,
dadurch gekennzeichnet,
daß zwei oder mehr Teile (11, 13) lösbar und elektrisch leitend miteinander verbunden sind.

5. Vorrichtung nach einem der Ansprüche 1 bis 4,
dadurch gekennzeichnet,
daß das eine Teil die Düse (11) ist und das andere Teil (13) mit der Auswerteeinheit (16) verbunden ist.

6. Vorrichtung nach einem der Ansprüche 1 bis 5,
dadurch gekennzeichnet,
daß zwei oder mehr Teile (11, 14) elektrisch leitend sind und über einen Isolator (18) miteinander verbunden sind.

7. Vorrichtung nach einem der Ansprüche 1 bis 6,
dadurch gekennzeichnet,
daß der Auswerteeinheit (16) eine elektrische Umschalteinrichtung (23) zugeordnet ist, mittels der die einzelnen Teile (11, 14) des Bearbeitungswerkzeuges (10) einzeln oder gemeinsam aktiv schaltbar sind.

8. Vorrichtung nach einem der Ansprüche 1 bis 7,
dadurch gekennzeichnet,
daß die Auswerteeinheit (16) eine Anpasschaltung aufweist, mittels der die Auswerteeinheit (16) auf die aktiv geschalteten Teile (11, 14) einstellbar ist.
